# EUROPEAN PATENT APPLICATION

(11) **EP 1 271 419 A2**
(43) Date of publication of application: **02.01.2003**
(21) Application number: 02013294.0
(22) Date of filing: 18.06.2002
(51) Int. Cl.: G07C 9/00

(54) **A barrier detector device**

(30) Priority: 18.06.2001 IT TO20010587
(71) Applicant: Mallarino, Giuseppe, 10020 Pecetto Torinese, (Torino) (IT); Naretto, Adriano, 10137 Torino (IT)
(72) Inventor: Mallarino, Giuseppe, 10020 Pecetto Torinese, (Torino) (IT); Naretto, Adriano, 10137 Torino (IT)
(74) Representative: Quinterno, Giuseppe

(57) **Abstract**

The device comprises:
a first structure and a second structure (1, 2) which can be fixed facing one another and each of which comprises:
   - a transmitter (TX1, TX2) and a receiver (RX1, RX2) of radiation, operatively facing the receiver (RX2, RX1) and the transmitter (TX2, TX1) of the other structure (2, 1), respectively,
   - an electronic control unit (11, 21), and
   - an electrical supply battery (12, 22).

The control unit (11) of a first structure (1) is arranged to bring about the transmission of an encoded sequence of pulses which has a predetermined duration (T1) and which is repeated cyclically after pauses also having a predetermined duration (T2).

The control unit (21) of the other or second structure (2) is arranged to implement an initial learning procedure in which it can acquire the sequence of pulses and the duration (T2) of the pause, and to bring about the retransmission of the sequence by the transmitter (TX2) of the second structure (2) to the receiver (RX1) of the first (1).

The control units (11, 21) are also arranged to implement a subsequent normal operation procedure in which:
after each receipt of the sequence (T1), the electronic control unit (21) of the second structure (2) brings about its retransmission to the receiver (RX1) of the first structure (19) with a predetermined delay (T3), and
the control unit (11) of the first structure (1) continues to repeat the transmission of the sequence (T1), alternating with pauses having the predetermined duration (T2), for as long as, in each pause (T2), the associated receiver (RX1) receives the sequence retransmitted by the transmitter (TX2) of the other structure (2), and the control unit (11) generates an alarm signal as soon as a failed receipt of the retransmitted signal occurs.

## Description

The present invention relates to a barrier detector device, in particular for detecting and indicating passage through a passageway or an entrance.

An object of the present invention is to provide a barrier detector device which is reliable in operation, has a simple structure, and is extremely easy to install.

This and other objects are achieved, according to the invention, by a barrier detector device the principal characteristics of which are defined in appended Claim 1.

The devices and circuits associated with one structure and with the other structure of the device according to the invention can advantageously be supplied by means of batteries or cells which are easily available commercially and are preferably of the long-life type, without the need to lay wires or lines for connection to other electrical sources or supplies.

Moreover, the device according to the invention does not require the laying of connecting wires for ensuring synchronism between the devices associated with one structure and with the other, or connecting wires for transmitting a passage signal to control apparatus.

Further characteristics and advantages of the invention will become clear from the following detailed description, given purely by way of non-limiting example, with reference to the appended drawings, in which:
Figure 1 is a schematic view of a barrier detector device according to the present invention,
Figure 2 is a series of graphs which show examples of the curves of signals generated or received during the operation of the devices of which the barrier detector of Figure 1 is composed, as functions of time, given on the abscissa,
Figure 3 is a schematic view of another device according to the invention,
Figure 4 is a series of graphs relating to signals generated or received in the device of Figure 3, in operation, and
Figure 5 is a schematic view of a variant.

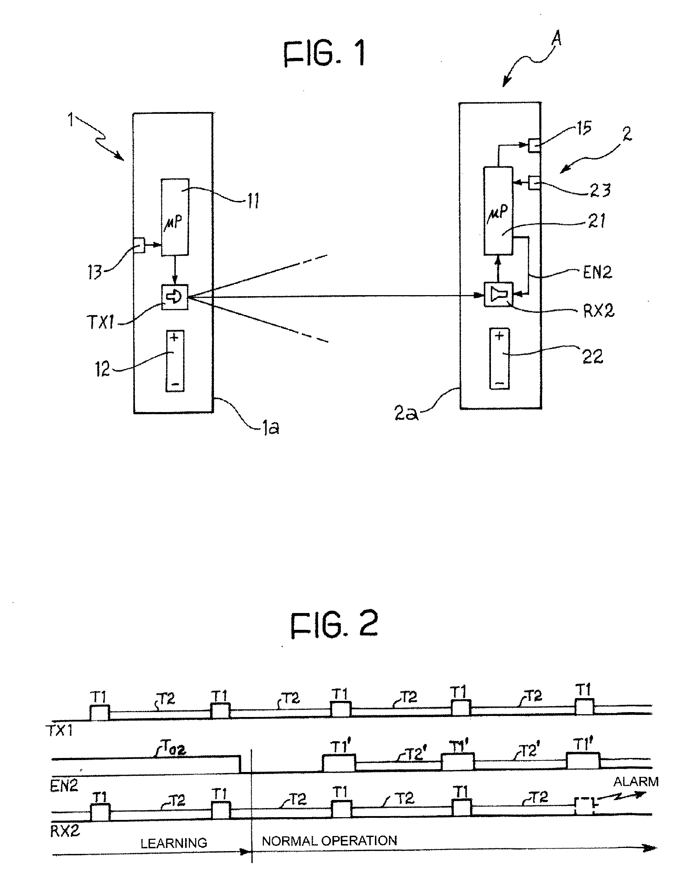

In Figure 1, a barrier detector device according to the invention is generally indicated A.

The device comprises a first structure 1 and a second structure 2 which are fixed operatively facing one another and spaced apart. In the embodiment shown, the structures comprise two elongate bar-like housings, the facing walls 1a and 2a of which are advantageously made of material which is permeable to infra-red rays.

The structures 1 and 2 enclose within them an infra-red beam transmitter TX1 and an infra-red beam receiver RX2, respectively. These devices are connected to and controlled by respective electronic control units 11, 21 which comprise, for example, a microprocessor, and which are also housed in the structures 1 and 2. A battery of accumulators or cells 12, preferably of the long-life type, is provided in the structure 1, for the electrical supply of the devices and circuits associated therewith.

Similarly, a battery of accumulators or cells 22 is provided in the support structure 2, for the electrical supply of the devices and circuits associated therewith.

Respective detectors or sensors 13 and 23 may advantageously be associated with the structures 1 and 2 for indicating to the corresponding control units 11 and 21 any attempts to detach the structures from their positions of use, for example, for tampering purposes.

The structures 1 and 2 are operatively fixed in respective facing positions, as described above, across a passageway or entrance path, in order to form an invisible barrier which, when crossed, permits the transmission of a signal, as will be described in greater detail below.

The electronic control unit 11 associated with the structure 1 is arranged to bring about the transmission of a predetermined encoded sequence of pulses which has a predetermined duration T1 and is repeated cyclically after pause periods, also having a predetermined duration T2. The duration of the pause T2 is preferably much greater than the overall duration T1 of each encoded sequence of pulses.

The encoded signal transmitted by the transmitter TX1 is shown schematically in the upper graph of Figure 2. In this graph, the encoded sequence of pulses is illustrated in simplified manner in the form of a single pulse. However, the sequence is intended to comprise a plurality of suitably encoded bits.

In operation, the infra-red radiation transmitted by the transmitter TX1 reaches and is picked up by the receiver RX2. The signal correspondingly generated by the receiver thus has substantially the curve shown schematically in the third graph of Figure 2.

The electronic control unit 21 associated with the structure 2 is arranged to implement, initially, a learning procedure in which it acquires, by means of the receiver RX2, the encoded sequence of pulses transmitted by the transmitter TX1, as well as the duration T2 of the pause periods. For this purpose, as shown by the graph of the enabling signal EN2 in Figure 2, the control unit 21 initially enables the receiver RX2 to receive for a period of time T₀₂ so that the receiver RX2 can receive at least two encoded sequences of pulses transmitted by the transmitter TX1, spaced apart by a pause of duration T2.

When the encoded sequence of pulses and the duration T2 of the pauses have been acquired, the learning procedure is concluded and the normal operation stage starts.

During normal operation, the control unit 21 associated with the structure 2 enables the associated receiver RX2 to receive for periods of time of duration T1' which include the periods T1 of transmission of the encoded sequence by the transmitter TX1 of the first structure 1, and which are separated by periods T2' in which the receiver RX2 is disabled and which have a duration less than or at most almost equal to that of the pause periods T2. The energy consumption borne by the battery 22 is thus drastically reduced.

If no body or object passes through the opening or passageway defined between the structures 1 and 2, during each enablement period T1', the receiver RX2 picks up the encoded sequence transmitted by the transmitter TX1 of the structure 1 and supplies corresponding signals to the control unit 21.

If, however, owing to a crossing of the barrier, the receiver RX2 does not pick up the encoded sequence during one of its enablement periods, as shown in the lower portions farthest to the right in the graphs of Figure 2, the control unit 21 drives an associated radio-transmitter 15 (Figure 1), which is also housed in the structure 2, and which transmits an alarm signal remotely.

It will be appreciated that the above-described barrier detector device does not require the laying of wires for connection to electrical sources or supplies, for connection between the two structures for synchronism signals, or for the remote transmission of the alarm signal in the event the barrier being crossed.

The control unit 11 associated with the structure 1 may advantageously be arranged to bring about an alteration of the code associated with the sequence which is transmitted to the receiver RX2 of the other structure, if the associated detector or sensor 13 supplies a signal indicative of an attempt to move or tamper with the structure. The alteration of the code can lead to the transmission of an alarm signal as soon as the altered code is picked up by the receiver RX2 of the structure 2.

The control unit 21 may be arranged to activate the alarm generator 15 if the associated detector or sensor 23 supplies a signal indicative of an attempt to move or tamper with the structure 2.

If an object or obstacle is interposed between the structures 1 and 2 and remains between the structures for a prolonged period of time, to avoid loss of synchronism between the devices of the two structures 1 and 2 when the obstacle is removed and the barrier is no longer interrupted, the control unit 21 associated with the structure 2 may advantageously be arranged to repeat the learning procedure periodically, by enabling the receiver RX2 for a period of time at least equal to T2+2T1, so that it can pick up two consecutive encoded sequences separated by a pause period.

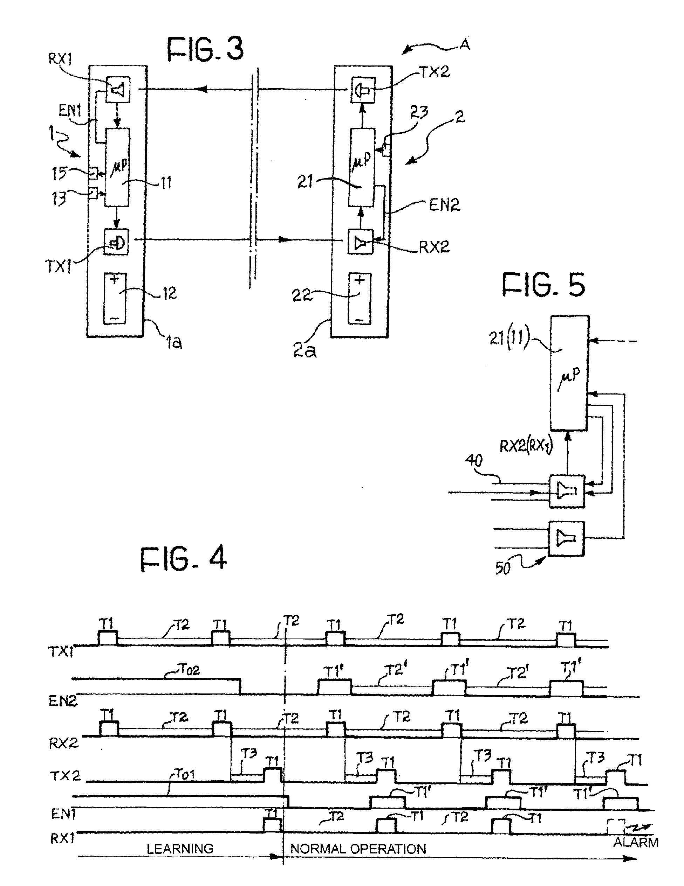

A variant will now be described with reference to Figures 3 and 4, in which parts and elements already described have again been attributed the same alphanumeric references used above.

The device A shown in Figure 3 also comprises a first structure 1 and a second structure 2, operatively fixed facing one another and spaced apart.

The structure 1 encloses within it an infra-red beam transmitter TX1 and an infra-red beam receiver RX1. These devices are connected to and controlled by an electronic control unit 11.

Similarly, an infra-red beam transmitter TX2 and an infra-red beam receiver RX2 are disposed in the structure 2, operatively facing the receiver RX1 and the transmitter TX1 of the other structure, respectively.

The transmitter TX2 and the receiver RX2 are connected to and controlled by an electronic control unit 21.

As in the device of Figure 1, the electronic control unit 11 associated with the structure 1 of Figure 3 is arranged to bring about the transmission of a predetermined encoded sequence of pulses which has a predetermined duration T1 and is repeated cyclically after pause periods, also having a predetermined duration T2. The duration of the pause T2 is preferably much greater than the overall duration T1 of each encoded sequence of pulses.

The encoded signal transmitted by the transmitter TX1 is shown schematically in the upper graph of Figure 4.

In operation, the infra-red radiation transmitted by the transmitter TX1 reaches and is picked up by the receiver RX2. The signal correspondingly generated by the receiver thus has substantially the curve shown schematically in the third graph of Figure 4.

The electronic control unit 21 associated with the structure 2 is arranged to implement, initially, a learning procedure in which it acquires, by means of the receiver RX2, the encoded sequence of pulses transmitted by the transmitter TX1, as well as the duration T2 of the pause periods. For this purpose, as shown by the graph of the enabling signal EN2 in Figure 4, the control unit 21 initially enables the receiver RX2 to receive for a period of time T₀₂ so that the receiver RX2 can receive at least two encoded sequences of pulses transmitted by the transmitter TX1, spaced apart by a pause of duration T2.

When the encoded sequence of pulses and the duration T2 of the pauses have been acquired, and when a period of time T3 has elapsed after the receipt of the last encoded sequence of pulses, the control unit 21 of the structure 2 brings about the retransmission of the encoded sequence by the associated transmitter TX2, to the receiver RX1 of the structure 1, as shown in the fourth graph of Figure 4. The receiver RX1, which is initially enabled to receive for a period of time T₀₁ by the control unit 11 (signal EN1 of Figure 4), receives this sequence of pulses and supplies a corresponding signal to the unit 11 which, having checked that the sequence received is correct, detects that the unit 21 of the structure 2 has correctly learnt the encoded sequence and has stored the duration of the pause T2. The learning stage is thus practically complete and normal operation of the barrier detector device thus starts.

During normal operation, the control unit 21 associated with the structure 2 enables the associated receiver RX2 to receive for periods of time of duration T1' which include the periods T1 of transmission of the encoded sequence by the transmitter TX1 of the first structure 1.

Advantageously, the receiver RX1 of the structure 1 is also driven, by the control unit 11, by an enabling signal EN1 with windows (of duration, for example, equal to T1'), in a manner similar to that used for the receiver RX2, in order to reduce the energy consumption borne by the battery 12.

If no body or object passes through the opening or passageway defined between the structures 1 and 2, during each enablement period T1', the receiver RX2 picks up the encoded sequence transmitted by the transmitter TX1 of the structure 1 and supplies corresponding signals to the control unit 21. The control unit 21 arranges for this sequence to be retransmitted to the receiver RX1 of the structure 1, with a delay T3.

The control unit 11 is arranged to bring about the transmission of an encoded sequence of pulses by the transmitter TX1, after a pause T2 following the previous one, upon the condition that the receiver RX1 has correctly received the sequence retransmitted by the transmitter TX2 of the other structure 2, in the course of the pause.

If, however, owing to a crossing of the barrier, the receiver RX1 does not pick up the encoded sequence during one of its enablement periods, as shown in the lower portions farthest to the right of the graphs of Figure 4, the control unit 21 drives an associated radio-transmitter 15 (Figure 3) which is housed in the structure 1, and which transmits an alarm signal remotely.

It will be appreciated that the barrier detector device according to Figure 3 also has no need for the laying of wires for connection to electrical sources or supplies, for connection between the two structures for synchronism signals, or for the remote transmission of the alarm signal in the event of the barrier being crossed.

The control units 11 and 21 associated with the structures 1 and 2 may advantageously be arranged to bring about an alteration of the code associated with the sequence which is transmitted towards the receiver of the other structure if the associated detectors or sensors 13 and 23 supply a signal indicative of an attempt to move or tamper with the structures. The alteration of the code can lead to the transmission of an alarm signal as soon as the altered code is picked up by the receiver of the structure opposite that in which the tampering attempt took place.

If an object or obstacle is interposed between the structures 1 and 2 and remains between the structures for a prolonged period of time, to avoid loss of synchronism between the devices of the two structures 1 and 2 when the obstacle is removed and the barrier is no longer interrupted, the control unit 21 associated with the structure 2 may advantageously be arranged to repeat the learning procedure periodically, by enabling the receiver RX2 for a period of time at least equal to T2+2T1 so that it can pick up two consecutive encoded sequences separated by a pause period.

Advantageously, as shown in Figure 5, a device 40 for limiting the angle in which radiation is picked up, for example, a portion of tubing of a material which is not transparent to infra-red beams, is fitted on the or each receiver. This device renders the associated receiver more directional and less susceptible to being "blinded" by environmental infra-red radiation, for example, solar radiation. In some conditions of use, the use of such a device does not avoid the period of "blinding" of the receiver permanently. This may occur, for example, with devices which are installed in the open, and the operation of which may be disturbed by the sun, even though for a short period within the space of a day.

To prevent this problem, a sensor 50 may advantageously be associated with the or each receiver for supplying to the corresponding control unit 21 (11) signals indicative of the intensity of the environmental radiation in the vicinity of the receiver. The control unit 21 (11) is then advantageously arranged to implement, for as long as the intensity exceeds a predetermined level, a safety procedure directed towards reducing the risk of malfunctioning of the barrier device according to the invention and, in particular, the generation of false alarms or failure to generate alarms.

In a device of the type according to Figure 1 or Figure 3, the control unit may, for example, be arranged to permit the generation of an alarm, during the safety procedure, solely after a predetermined number (greater than 1) of failed receipts of a sequence transmitted, or retransmitted have occurred.

In addition, or alternatively, in a device according to Figure 3, in the safety procedure, the control unit may be arranged to bring about an increase in the power of the signals transmitted to the associated transmitter in order to improve the ratio between these signals and the environmental "noise".

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A barrier detector device, comprising:
a first structure and a second structure (1, 2) which are adapted to be fixed facing one another and spaced apart and cf which one comprises a transmitter of radiation (TX1) and the other a respective receiver (RX2) of radiation, operatively facing one another and associated with respective electronic control means (11, 21), each structure having respective electrical-supply storage means (12, 22),
the electronic control means (11) of the first structure (1) being arranged to bring about the transmission by the associated transmitter (TX1) of a predetermined encoded sequence of pulses which has a predetermined duration (T1) and is repeated cyclically after pauses also having a predetermined duration (T2),
the electronic control means (21) of the other or second structure (2) being arranged to implement an initial learning procedure in which they can acquire, by means of the associated receiver (RX2), the encoded sequence of pulses and the duration (R2) of the pause,
the control means (11, 21) of the structures (1, 2) also being arranged to implement a subsequent normal operation procedure in which:
the control means (11) of the first structure (1) continue to repeat the transmission of the sequence (T1) alternating with pauses having the predetermined duration (T2), and
the control means of the other structure (22) enable the associated receiver (RX2) for successive limited periods of time (T1') which include the periods of transmission (T2) of the sequence by the transmitter (TX1) of the first structure (1), and in which
the control means (11, 21) are arranged to bring about the generation of an alarm signal when at least one failed receipt of a transmitted sequence occurs.

2. A barrier detector device according to Claim 1 in which each of the first structure and the second structure (1, 2) comprises a respective transmitter (TX1, TX2) and a respective receiver (RX1, RX2) of radiation, operatively facing the receiver (RX2, RX1) and the transmitter (TX2, TX1) of the other structure (2, 1), respectively, and electronic control means (11, 21) associated with the transmitter (TX1, TX2) and with the receiver (RX1, RX2);
the electronic control means (11) of the first structure (1) being arranged to bring about the transmission of a predetermined encoded sequence of pulses which has a predetermined duration (T1), and which is repeated cyclically after pauses also having a predetermined duration (T2),
the electronic control means (21) of the other or second structure (2) being arranged to implement an initial learning procedure in which they can acquire the encoded sequence of pulses and the duration (T2) of the pause and to bring about retransmission of the sequence by the transmitter (TX2) of the second structure (2) to the receiver (RX1) of the first (1),
the control means (11, 21) of the structures (1, 2) also being arranged to implement a subsequent normal operation procedure, in which:
after each receipt of the sequence (T1), the control means (21) of the second structure (2) bring about its retransmission to the receiver (RX1) of the first structure (1) with a predetermined delay (T3), and
the control means (11) of the first structure (1) continue to repeat the transmission of the sequence (T1), alternating with pauses having the predetermined duration (T2), for as long as, during each pause (T2), the associated receiver (RX1) receives the sequence retransmitted by the transmitter (TX2) of the other structure (2), and the control means (11) generate an alarm signal as soon as at least one failed receipt of the retransmitted sequence occurs.

3. A device according to Claim 2 in which the electronic control means (11, 21) of the first and second structures (1, 2) are arranged, during the normal operation procedure, to enable the respective receiver (RX1, RX2) to receive for limited periods of time (T1') which include the periods of transmission (T1) of the sequence by the transmitter (TX2, TX1) of the other structure (2, 1).

4. A device according to Claim 2 or Claim 3 in which the electronic control means (11) associated with the first structure (1) are arranged to count the number of consecutive failed receipts of the encoded sequence retransmitted by the second structure (2) and to bring about restarting of the learning procedure when this number reaches a predetermined value.

5. A device according to any one of the preceding claims in which the overall duration (T1) of the encoded sequence of pulses is much less than the duration (T2) of the pauses and the duration of the periods of enablement (T1') is much less than the duration of the periods of disablement (T2') of the receiver or receivers (RX1, RX2).

6. A device according to any one of the preceding claims in which the or each transmitter and the or each receiver are transmitters and receivers of infra-red beams.

7. A device according to any one of the preceding claims in which a radio-transmitter (15) for emitting radio alarm signals is associated with the electronic control means (11, 21) of one of the structures (1, 2) .

8. A device according to any one of the preceding claims, in which electronic control means (11, 21) of at least one of the structures (1, 2) are arranged to bring about an alteration of the code associated with the sequence transmitted towards the other structure (2, 1) when tampering sensors (13, 23) associated respectively therewith supply signals indicative of an attempt to tamper with the at least one structure (1, 2).

9. A device according to Claim 6 in which a device (40) for limiting the angle in which radiation is picked up is associated with the or each receiver (RX1; RX2).

10. A device according to Claim 6 or Claim 9 in which a respective sensor (50) is associated with the or each receiver (RX1; RX2), and can supply to the corresponding control means (11, 21) signals indicative of the intensity of the environmental radiation in the region of the receiver (RX1, RX2), and in which the control means (11; 21) are arranged to detect when the intensity of the environmental radiation exceeds a predetermined level and, in that event, to implement a safety procedure directed towards reducing the risk of malfunctioning of the barrier device (A).

11. A device according to Claim 10 in which the control means (11, 21) are arranged to permit the generation of an alarm signal, during the safety procedure, only after a predetermined number, greater than 1, of failed receipts of a retransmitted transmitted sequence has occurred.

12. A device according to Claims 2 and 10 in which the control means (11, 21) are arranged to bring about an increase in the power of the signals transmitted by the transmitters (TX1, TX2), during the safety procedure.
